Europäisches Patentamt

(19) European Patent Office

Office européen des brevets

(11) Numéro de publication: **0 082 766**
**B1**

# (12) FASCICULE DE BREVET EUROPEEN

(45) Date de publication du fascicule du brevet:
24.07.85

(51) Int. Cl.⁴: **H 04 Q 9/00**

(21) Numéro de dépôt: **82402293.3**

(22) Date de dépôt: **14.12.82**

(54) Procédé de centralisation de données et système de centralisation de données appliquant ce procédé.

(30) Priorité: **23.12.81 FR 8124157**

(43) Date de publication de la demande:
**29.06.83 Bulletin 83/26**

(45) Mention de la délivrance du brevet:
**24.07.85 Bulletin 85/30**

(84) Etats contractants désignés:
**DE IT SE**

(56) Documents cités:
**DE - A - 2 853 147**
**US - A - 3 876 986**

**WESCON TECHNICAL PAPERS, no. 18, 1974, pages 1-4, "paper" 23/4, Western Periodicals, North Hollywood, USA A.J. WEISSBERGER: "Microprocessors as intelligent remote controllers"**

(73) Titulaire: **COMPAGNIE EUROPEENNE DE TELETRANSMISSION C.E.T.T., 51, boulevard de la Republique, F-78400 Chatou (FR)**

(72) Inventeur: **Nachan, Philippe, THOMSON-CSF SCPI 173, bld Haussmann, F-75379 Paris Cedex 08 (FR)**

(74) Mandataire: **Weinmiller, Jürgen et al, Zeppelinstrasse 63, D-8000 München 80 (DE)**

ACTORUM AG

## Description

L'invention concerne les systèmes de centralisation de données, collectant les données fournies par différentes sources et les acheminant vers un poste central. De tels systèmes sont utilisés, par exemple, pour surveiller de grandes installations industrielles, en centralisant des télésignalisations, des télémesures, des télécomptages, etc. Le système est composé de postes satellites reliés en parallèle sur une ligne connectée au poste central. Chaque source de données est reliée par une ligne au poste central. Chaque source de données est reliée par une ligne au poste satellite le plus proche. Les informations recueillies sont affichées sur un tableau synoptique ou sont imprimées sur une bande de papier, par exemple.

Un procédé connu, pour centraliser les données fournies par les sources, consiste à faire collecter et stocker les informations par un processeur local, situé dans chaque poste satellite, puir à transmettre les informations nouvelles au poste central, sur sa demande. Chaque source est désignée par le processeur local par une valeur numérique, dite adresse de scrutation. Au cours du dialogue entre un poste satellite et le poste central chaque source est désignée par une valeur numérique, dite adresse d'interrogation. Il est connu de répartir en groupe les sources reliées à un même poste satellite en fonction de leur type, et d'attribuer pour chaque groupe de sources des valeurs d'adresses de scrutation consécutives, en commençant par une valeur bien définie. L'adresse d'interrogation d'une source est alors constituée par la valeur du rang de cette source dans son groupe, associée au numéro du poste satellite et au numéro de code désignant le groupe auquel appartient la source interrogée. Ce procédé permet de diminuer la quantité d'information nécessaire pour désigner une source.

Le brevet US No 3876986 décrit un système de centralisation de données, où les sources de données sont ainsi interrogées successivement par le poste central. Ce dernier comporte une mémoire morte stockant le nombre de sources de chaque groupe de chaque station, et comporte un compteur pour générer une suite de valeurs d'adresses consécutives pour chaque groupe de chaque station limitant le nombre d'adresses de cette suite au nombre de sources indiqué par la mémoire. Ainsi le système ne perd pas de temps à interroger des adresses auxquelles il n'y a pas de sources et qui sont seulement des réserves pour d'éventuelles sources supplémentaires.

Quand le nombre de sources d'un groupe doit être modifié, soit pour augmenter le nombre de sources de données prises en compte, soit pour le diminuer, par exemple pendant la durée de certains travaux de réparation, le processeur local de ce groupe et le poste central doivent en être informés, notamment pour que la procédure de scrutation soit modifiée. Dans ce cas la solution classique consiste à faire une modification du programme de gestion du poste central, et du programme de gestion locale du poste satellite auquel sont raccordées les sources du groupe modifié. La modification du programme de gestion locale dans le poste satellite nécessite un personnel qualifié et un matériel spécialisé pour programmer de nouvelles données dans des mémoires vives ou dans des mémoires mortes.

La demande de brevet allemand DE No 2853147 décrit un système de centralisation de données où chaque station comporte un processeur local et des capteurs reliés aux sources de données. Ce processeur interroge, lors de la mise en service, toutes les valeurs d'adresses possibles pour les capteurs de chaque groupe et ensuite il interroge cycliquement les capteurs en n'envoyant que les valeurs d'adresses ou un capteur a été détecté présent.

Le procédé selon l'invention remédie à ces inconvénients par des moyens simples, en permettant une modification automatique d'une partie du programme de gestion local dans les postes satellites lorsque le nombre de sources est modifié.

Selon l'invention, un procédé de centralisation de données consistant à répartir les sources des données en groupes, les sources d'un groupe étant scrutées par un processeur local en étant désignées chacune par une adresse, dite adresse de scrutation, dont la valeur est affectée par un opérateur; consistant à transmettre les données fournies par les sources vers un poste central, en désignant chacune des sources par une adresse, dite adresse d'interrogation, est caractérisé en ce que: les valeurs des adresses de scrutation, d'une part, et les valeurs des adresses d'interrogation, d'autre part, sont des valeurs consécutives; en ce que, lors de toute modification du nombre de sources d'un groupe, il consiste:
— à faire scruter toutes les sources de ce groupe par le processeur local associé à ce groupe, pour déterminer les adresses de scrutation auxquelles une source est effectivement présente;
— à faire déterminer par le processeur local le nouveau nombre des sources effectivement présentes, déterminer une nouvelle suite de valeurs consécutives pour les adresses de scrutation, et lui faire transmettre ce nombre au poste central, et
— à faire déterminer par le poste central une nouvelle suite de valeurs d'adresses d'interrogation consécutives.

Selon l'invention, il est également prévu un système de centralisation de données appliquant ce procédé.

L'invention sera mieux comprise et d'autres détails apparaîtront dans la descrition ci-dessous et sur les figures l'accompagnant.

La fig. 1 représente le schéma synoptique d'un exemple de réalisation d'un système de centralisation de données appliquant le procédé selon l'invention.

La fig. 2 représente le schéma synoptique d'une partie du système représenté à la fig. 1.

La fig. 3 représente le schéma synoptique plus détaillé d'une partie du système représenté sur la fig. 1.

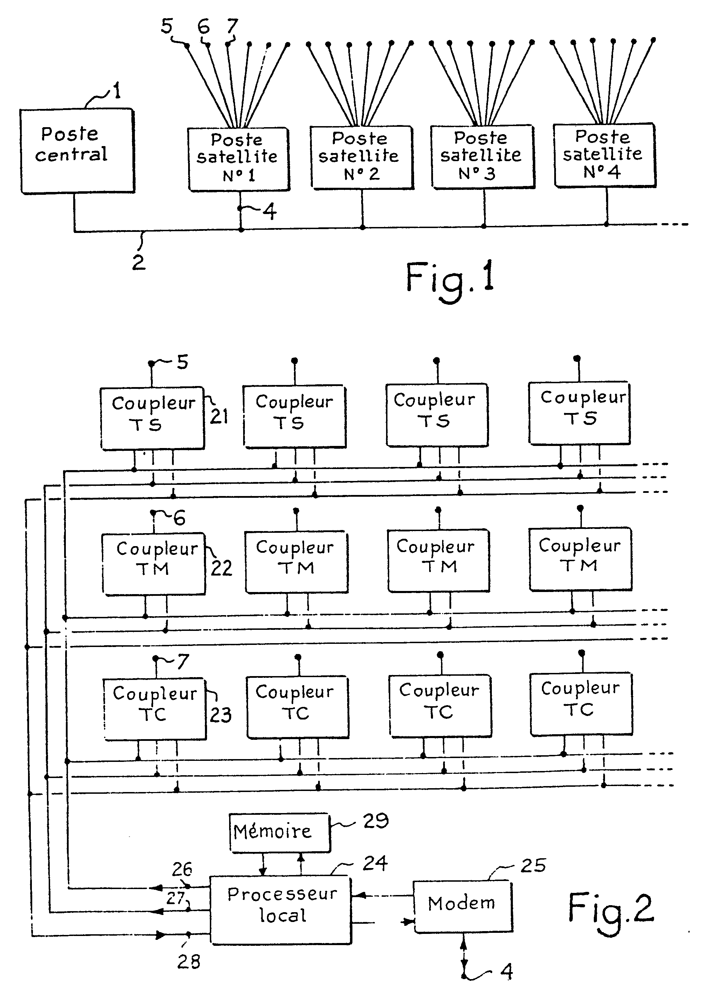

Sur la fig. 1, un poste central 1 est relié par une ligne téléphonique 2 à plusieurs postes satellites, Nos 1, 2, 3, 4, etc. Tous les postes satellites sont reliés en parallèle sur la ligne téléphonique 2, qui achemine des signaux du poste central vers les postes satellites et réciproquement. Le poste satellite Nº 1, par exemple, comporte une borne d'entrée-sortie 4 reliée à la ligne téléphonique 2, et est relié d'autre part à plusieurs sources de données par des bornes d'entrée 5, 6, 7. Les sources de données sont de différents types, ce sont, par exemple, des dispositifs de télésignalisation, de télémesure et de télécomptage.

Un signal de télésignalisation est un signal logique fourni, par exemple, par un contact de fin de course monté sur une machine; un signal de télémesure est une valeur numérique fournie par un capteur mesurant, par exemple, une température; un signal de télécomptage est constitué de plusieurs valeurs numériques constituant les chiffres fournis par les décades d'un compteur décimal, par exemple un compteur à six décades.

Chaque poste satellite est relié à des sources de données de différents types, par exemple le poste satellite Nº 1 est relié par une borne d'entrée multiple 5 à des capteurs de télésignalisation, par une borne d'entrée multiple 6 à des capteurs de télémesure, et par une borne d'entrée multiple 7 à des capteurs de télécomptage.

La fig. 2 représente le schéma synoptique d'un exemple de réalisation du poste satellite Nº 1, par exemple. Les bornes d'entrée, telle la borne 5, recevant des signaux de télésignalisation, sont reliées à des circuits adaptés au traitement de ce type de signaux, et dits coupleurs TS, tels que le coupleur 21. Par exemple chaque coupleur TS reçoit huit signaux de télésignalisation, et si le nombre de capteurs de télésignalisation reliés à ce poste satellite est supérieur à huit, d'autres coupleurs TS identiques au coupleur 21 peuvent être rajoutés dans le poste satellite. Les bornes d'entrée, telles que la borne 6, recevant des signaux de télémesure sont reliées à des copleurs TM, tels que le coupleur 22. Pour chaque source de signal de télémesure reliée au poste satellite un coupleur TM est disposé dans ce poste satellite. De même pour chaque source de signal de télécomptage un coupleur TC, tel que le coupleur 23 relié à la borne 7, est disposé dans le poste satellite. Chaque coupleur, quel que soit son type, est relié par des bus à des bornes de sortie 26 et 27 et à une borne d'entrée 28 d'un processeur local 24. Celui-ci est relié à une mémoire 29, et à un modem 25 lui permettant de transmettre et de recevoir des informations sur la ' ligne téléphonique 2 par la borne 4.

Le processeur local 24 dispose d'un ensemble limité de valeurs d'adresses utilisables pour la scrutation. Par exemple, les adresses dont la valeur hexadécimale est comprise entre C080 et C0FF sont réservées pour les adresses des coupleurs TS dans chacun des postes satellites. Les adresses dont les valeurs sont comprises entre C100 et C13F sont réservées pour les coupleurs TM, et les adresses dont les valeurs sont comprises entre C140 et C23F sont réservées pour les coupleurs TC. Dans cet exemple, une adresse de scrutation correspond à un coupleur TS, c'est-à-dire à huit sources de signaux de télésignalisation, et l'information envoyée vers le poste central 1 est un bloc de huit valeurs binaires constituant un octet. Par exemple si un poste satellite est relié à cent vingt-huit sources de signaux de télésignalisation il comporte seize coupleurs TS, tels que le coupleur 21, dont les adresses de scrutation sont: C080, C081, ... C08F.

Au moment de l'étude du système le concepteur attribue à chaque coupleur une adresse de scrutation choisie parmi les adresses réservées au type du coupleur considéré, et telle que dans chaque poste satellite la première valeur d'adresse attribuée à un certain type de coupleur est toujours la même, par exemple C080 pour les télésignalisations. Les autres coupleurs du poste satellite, du même type, ont des adresses consécutives. Lorsque les coupleurs sont installés dans les postes satellites, les trois chiffres hexadécimaux de plus faible poids de l'adresse de scrutation de chaque coupleur sont affectés en agissant manuellement sur trois commutateurs hexadécimaux incorporés au coupleur.

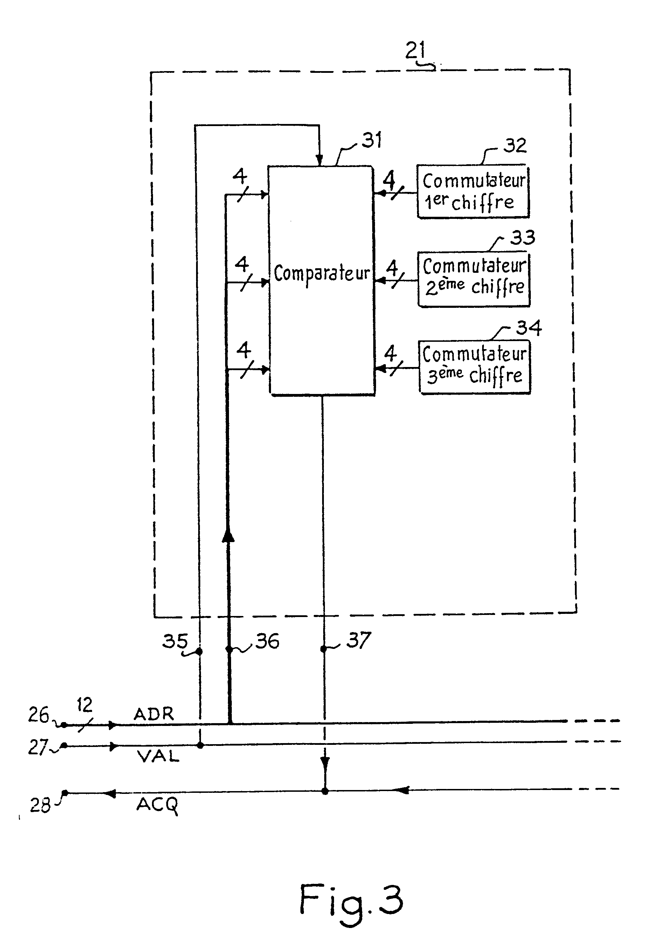

La fig. 3 représente le schéma synoptique d'un exemple de réalisation d'une partie d'un coupleur, par exemple le coupleur 21. Le coupleur 21 comporte trois commuateurs à seize positions, 32, 33 et 34 permettant d'attribuer à ce coupleur les trois chiffres hexadécimaux de poids le plus faible de son adresse de scrutation, par exemple 082 pour le troisième coupleur TS, d'adresse C082. Le coupleur 21 comporte en outre un comparateur 31 ayant trois entrées multiples reliées respectivement aux trois commutateurs 32, 33, 34, et trois entrées multiples reliées à une borne d'entrée multiple 36 du coupleur 21, une entrée de validation et une sortie reliées respectivement à une borne d'entrée 35 et à une borne de sortie 37 du coupleur 21. Les bornes 35 de tous les coupleurs sont reliées en parallèle, par un bus, à la borne de sortie 27 du processeur local 24. Les bornes 36 de tous les coupleurs sont reliées en parallèle, par un bus comportant douze conducteurs, à la borne de sortie 26 du processeur local 24, et les bornes de sortie 37 de tous les coupleurs sont reliées en parallèle, par un bus, à la borne d'entrée 28 du processeur local 24.

Dans chaque poste satellite les adresses des coupleurs d'un même type, par exemple des télésignalisations, étant consécutives, il est possible de les scruter successivement selon un processus simple et de détecter très facilement un coupleur défaillant, ne répondant plus.

Quand le processeur local 24 scrute les coupleurs du poste satellite auquel il appartient, il transmet sur sa borne de sortie multiple 26 une valeur d'adresse de scrutation ADR, puis sur sa borne de sortie 27 un signal logique de validation, VAL. Ces signaux sont reçus sur tous les coupleurs du poste satellite, mais un seul des coupleurs reconnaît son adresse de scrutation. Cette adresse est comparée, par le comparateur 31, à la valeur d'adresse attribuée au coupleur par les trois commutateurs 32, 33 et 34. Quand le comparateur 31 détecte que l'adresse ADR est égale à l'adresse affectée par les commutateurs 32, 33 et 34, il génère un signal logique d'acquittement ACQ transmis par la borne de sortie 37 du coupleur, et le bus, à l'entrée 28 du processeur local.

Un coupleur TS, par exemple, fournit au processeur local 24 les 8 informations fournies par les capteurs, le processeur local 24 les compare aux informations fournies précédemment par les mêmes sources, puis les stocke dans la mémoire 29, en positionnant un bit indicateur lorsqu'une de ces 8 informations a changé. Il y a un indicateur pour toutes les sources de télésignalisation, un indicateur pour toutes les sources de télémesure et un indicateur pour toutes les sources de télécomptage, dans chaque processeur local 24.

Dans le but de diminuer les quantités d'information transmises, la collecte d'une information par le poste central 1 se fait en deux interrogations. Dans une première étape le poste central 1 interroge chaque poste satellite pour savoir s'il a des informations nouvelles à transmettre, telles que des changements d'états de télésignalisations, de nouvelles valeurs de télémesures ou de télécomptages, ou la détection d'une panne de coupleur. Le poste satellite interrogé répond en envoyant au poste central son numéro de poste satellite et un mot de quatre bits désignant le groupe (TS, TM ou TC) où se situent les informations nouvelles, ou bien répond qu'il n'y en a pas. S'il y a des informations nouvelles dans le poste satellite interrogé, le poste central réalise une deuxième interrogation en envoyant le numéro du poste satellite et le numéro de code du groupe où elles sont apparues. Le processeur local 24 répond en envoyant son numéro de poste satellite, le numéro de code du groupe et, pour chaque coupleur fournissant une information nouvelle, la valeur de son rang dans le groupe et le contenu de l'information nouvelle.

Dans des cas particuliers, un opérateur situé au poste central peut demander l'état d'une source particulière en la désignant par le numéro du poste satellite, le numéro de code du groupe, et la valeur de rang du coupleur auquel est raccordée cette source.

Quand le nombre de coupleurs d'un groupe est modifié, temporairement pour une réparation, ou définitivement pour une modification du système, il est nécessaire d'informer le processeur local 24 et le poste central 1 de la nouvelle composition de ce groupe. La scrutation du processeur local 24 doit être modifiée pour ne balayer que les adresses utilisées, sinon elle prendrait inutilement du temps de calcul du processeur local 24. Le poste central 1 doit connaître les modifications intervenues dans un poste satellite pour détecter une anomalie telle qu'une panne de coupleur ou un coupleur absent, à la suite d'un démontage pour réparation ou à la suite d'une erreur, etc.

Le procédé selon l'invention rend automatique le comptage du nombre de coupleurs de chaque type présents dans un poste satellite. Ce comptage a lieu au cours d'une opération, dite initialisation, déclenchée lors de chaque remise sous tension d'un poste satellite, ou peut être déclenchée aussi sur ordre du poste central 1. Au cours d'une initialisation le processeur local 24 scrute toutes les adresses utilisables pour les coupleurs TS, puis toutes les adresses utilisables pour les coupleurs TM, puis toutes les adresses utilisables pour les coupleurs TC. En comptant le nombre de signaux ACQ reçus en retour, le processeur local 24 détermine le nombre de coupleurs de chaque type. Lors de la prochaine interrogation par le poste central 1, le processeur local 24 transmet la valeur de ces nombres. Il calcule les bornes supérieures délimitant les domaines d'adressage pour la scrutation de routine, celle-ci se limitant aux adresses occupées. Par exemple au cours de l'initialisation le processeur local 24 d'un poste satellite balaye le domaine d'adresses C080 à C0FF et recueille 16 réponses ACQ, il en déduit qu'il y a 16 coupleurs TS dans ce poste satellite, et la borne supérieure des valeurs d'adresses de scrutation est donc C07F + 10 = C08F (en code hexadécimal), puisque les valeurs des adresses de scrutation sont toujours choisies consécutives et commencent toujours par la même valeur C080.

Si dans ce même poste satellite deux coupleurs TS sont rajoutés, les adresses de scrutation qui leur sont affectées avec les commutateurs 32, 33, 34 sont les deux valeurs consécutives à C08F, c'est-à-dire C090 et C091. Après la mise en place de ces coupleurs le poste satellite est remis sous tension, ce qui provoque une initialisation du processeur local 24. Celui-ci scrute systématiquement les domaines d'adresses réservés aux différents types de coupleurs. En comptant le nombre de signaux ACQ reçus en balayant tout le domaine d'adresses réservé aux coupleurs TS, le processeur local 24 constate que 18 coupleurs TS répondent. Il transmet au poste central 1 la nouvelle valeur du nombre de coupleurs TS qui lui sont reliés; puis il reprend la scrutation de routine en scrutant les adresses C080 à C07F + 12 = C091 (en code hexadécimal).

Par contre, si deux coupleurs TS sont retirés définitivement, les réglages des commutateurs 32, 33, 34 des coupleurs restants sont modifiés pour rétablir la continuité de la suite des valeurs des adresses de scrutation dans le groupe des coupleurs TS. Si, dans l'exemple précédent, les coupleurs d'adresses C082 et C083 sont retirés définitivement, les commutateurs des coupleurs restants sont réglés manuellement selon le tableau suivant:

| anciennes adresses | nouvelles adresses |
| --- | --- |
| C080 | C080 (inchangé) |
| C081 | C081 (inchangé) |
| C082 | retiré |
| C083 | retiré |
| C084 | C082 |
| C085 | C083 |
| C086 | C084 |
| C087 | C085 |
| C088 | C086 |
| C089 | C087 |
| C08A | C088 |
| C08B | C089 |
| C08C | C08A |
| C08D | C08B |
| C08E | C08C |
| C08F | C08D |

Après avoir retiré les deux coupleurs et réglé les commutateurs, l'opérateur remet le poste satellite sous tension. Cela initialise le processeur local 24, il scrute systématiquement les domaines d'adresses réservés aux différents types de coupleurs. En comptant le nombre de signaux ACQ reçu en balayant tout le domaine d'adresses réservé aux coupleurs TS le processeur local 24 constate que 14 coupleurs TS répondent. Il transmet au poste central 1 la valeur du nombre de coupleurs TS qui lui sont reliés, puis il reprend la scrutation de routine dans le domaine des adresses C080 à C07F + E = C08D (en code hexadécimal). Un opérateur, situé au poste central, modifie le fichier mémorisant la désignation des sources, pour faire disparaître les désignations des sources de données qui étaient situées en deuxième et troisième rang, et décaler les désignations suivantes du groupe de télésignalisations qui a été modifié. Dans les dialogues ultérieurs entre le poste central 1 et ce poste satellite, les adresses d'interrogation n'ont plus les mêmes valeurs. Par exemple le dernier coupleur TS du groupe n'est plus désigné comme étant au 16e rang, mais comme étant au 14e rang.

Si un des coupleurs est retiré temporairement les adresses affectées aux autres coupleurs du groupe ne sont pas modifiées. Le processeur local 24 détecte au cours de l'initialisation qu'il y a une discontinuité dans la suite des réponses, sauf dans le cas particulier où c'est le dernier coupleur du groupe. Il transmet au poste central la nouvelle valeur du nombre de coupleurs et le rang désignant le coupleur manquant, mais la valeur de rang attribuée à chacun des autres reste inchangée. Par exemple, si le cinquième coupleur TS, ayant pour adresse de scrutation C084, est retiré temporairement pour réparation, le processeur local 24 constate qu'il n'y a que 15 coupleurs restant dans le groupe, mais le coupleur d'adresse C085, par exemple, garde cette valeur d'adresse pour la scrutation et il continue à être désigné comme le sixième coupleur du groupe, dans les dialogues entre le poste satellite et le poste central.

Dans le cas où le dernier coupleur du groupe est retiré le processeur local 24 ne peut pas détecter que cette absence est anormale, par contre le poste central 1 peut détecter l'anomalie en comparant le nombre de coupleurs présents avec le nombre de coupleurs prévus, mémorisé dans un fichier.

Si un des coupleurs vient à tomber en panne le processeur local 24 constate, au cours d'une scrutation de routine, que ce coupleur ne répond plus. Il détermine le rang de ce coupleur et le transmet au poste central pour l'alerter. Les valeurs de rang des autres coupleur sont inchangées.

Le procédé selon l'invention ne se limite pas à l'application décrite et représentée, il peut être appliqué à de nombreux autres types de systèmes de centralisation de données, ayant des procédures de centralisation différentes de celle décrite dans cet exemple.

**Revendications**

1. Procédé de centralisation de données consistant à répartir les sources des données en groupes, les sources (5, 6, 7, ...) d'un groupe étant scrutées par un processeur local (24) en étant désignées chacune par une adresse, dite adresse de scrutation, dont la valeur est affectée par un opérateur; consistant à transmettre les données fournies par les sources (5, 6, 7, ...) vers un poste central (1), en désignant chacune des sources (5, 6, 7, ...) par une adresse, dite adresse d'interrogation, caractérisé en ce que les valeurs des adresses de scrutation, d'une part, et les valeurs des adresses d'interrogation, d'autre part, sont des valeurs consécutives; en ce que, lors de toute modification du nombre de sources (5, 6, 7, ...) d'un groupe, il consiste:
— à faire scruter toutes les sources de ce groupe par le processeur local (24) associé à ce groupe, pour déterminer les adresses de scrutation auxquelles une source est effectivement présente;
— à faire déterminer par le processeur local (24) le nouveau nombre des sources effectivement présentes, déterminer une nouvelle suite de valeurs consécutives pour les adresses de scrutation, et lui faire transmettre ce nombre au poste central (1), et
— à faire déterminer par le poste central (1) une nouvelle suite de valeurs d'adresses d'interrogation consécutives.

2. Procédé selon la revendication 1, caractérisé en ce que la borne inférieure de la suite des valeurs d'adresses de scrutation a une valeur fixe; en ce que sa borne supérieure a une valeur qui augmente de n unités (n entier) si le nombre de sources appartenant au groupe considéré augmente de n unités, et qui diminue de n unités si le nombre de sources appartenant à ce groupe diminue de n unités, et en ce que sa borne supérieure est inchangée dans le cas où une source tombe en panne et dans le cas où une source est supprimée sans changement des adresses affectées aux autres sources par un opérateur.

3. Système de centralisation de données appliquant le procédé selon l'une des revendications 1 ou 2, comportant un poste central (1) et des postes satellites (Nos 1, 2, ...) auxquels sont reliés des groupes de sources de données 5, 6, 7, ...), chaque poste satellite (Nos 1, 2, ...) comportant un processeur local (24) pour scruter les sources de données, caractérisé en ce que le processeur local (24) de chaque poste satellite (Nos 1, 2, 3, ...) est programmé pour:
— déterminer le nombre de sources (5, 6, 7, ...) reliées à ce poste satellite (Nos 1, 2, 3, ...);
— transmettre ce nombre vers le poste central (1);
— déterminer une suite de valeur d'adresses consécutives correspondant à ce nombre, pour scruter les sources (5, 6, 7, ...), et
en ce que le poste central (1) comporte un processeur pour déterminer à partir de ce nombre une suite de valeurs d'adresses consécutives pour interroger les sources (5, 6, 7, ...).

**Patentansprüche**

1. Verfahren zur Zentralisierung von Daten, welches darin besteht, dass die Datenquellen in Gruppen eingeteilt werden, wobei die Quellen (5, 6, 7, ...) einer Gruppe durch einen lokalen Prozessor (24) geprüft werden, wobei sie jeweils durch eine Adresse bezeichnet werden, die Prüfadresse genannt wird und deren Wert durch einen Operator zugewiesen wird; darin bestehend, dass die von den Quellen (5, 6, 7, ...) gelieferten Daten zu einer zentralen Station (1) übertragen werden, indem jede der Quellen (5, 6, 7, ...) durch eine Adresse bezeichnet wird, die Abfrageadresse genannt wird, dadurch gekennzeichnet, dass die Werte der Prüfadressen einerseits und die Werte der Abfrageadressen andererseits aufeinanderfolgende Werte sind; dass bei jeglicher Veränderung der Anzahl von Quellen (5, 6, 7, ...) einer Gruppe es darin besteht, dass:

— alle Quellen dieser Gruppe durch den lokalen Prozessor (24), welcher dieser Gruppe zugeordnet ist, geprüft werden, um die Prüfadressen zu bestimmen, an denen eine Quelle effektiv vorhanden ist;

— der lokale Prozessor (24) veranlasst wird, die neue Anzahl von effektiv vorhandenen Quellen zu bestimmen, eine neue Folge von aufeinanderfolgenden Werten für die Prüfadressen zu bestimmen und diese Anzahl zu der zentralen Station (1) durch ihn übertragen zu lassen, und

— die zentrale Station (1) veranlasst wird, eine neue Folge von aufeinanderfolgenden Werten von Abfrageadressen zu bestimmen.

2. Verfahren nach Anspruch 1, dadurch gekennzeichnet, dass die untere Grenze der Folge von Prüfadressenwerten einen festen Wert besitzt, dass ihre obere Grenze einen Wert aufweist, der um n Einheiten (n ganzzahlig) zunimmt, wenn die Anzahl von zur betrachteten Gruppe gehörenden Quellen um n Einheiten zunimmt, und um n Einheiten abnimmt, wenn die Anzahl von zu dieser Gruppe gehörenden Quellen um n Einheiten abnimmt; und dass ihre obere Grenze unverändert bleibt, wenn eine Quelle versagt und wenn eine Quelle entfernt wird, ohne die Adressen zu verändern, welche den anderen Quellen durch einen Operator zugewiesen sind.

3. System zur Zentralisierung von Daten, bei welchem das Verfahren nach einem der Ansprüche 1 oder 2 angewendet wird, mit einer zentralen Station (1) und Satellitenstationen (Nrn. 1, 2, ...), mit denen Gruppen von Datenquellen (5, 6, 7, ...) verbunden sind, wobei jede Satellitenstation (Nrn. 1, 2, ...) einen lokalen Prozessor (24) zum Prüfen der Datenquellen umfasst, dadurch gekennzeichnet, dass der lokale Prozessor (24) jeder Satellitenstation (Nrn. 1, 2, 3, ...) programmiert ist, um:

— die Anzahl von Quellen (5, 6, 7, ...) zu bestimmen, welche mit dieser Satellitenstation (Nrn. 1, 2, 3, ...) verbunden sind;

— diese Anzahl zu der zentralen Station (1) zu übertragen;

— eine Folge von aufeinanderfolgenden Adressenwerten zu bestimmen, welche dieser Anzahl entsprechen, um die Quellen (5, 6, 7, ...) zu prüfen, und

dass die zentrale Station (1) einen Prozessor umfasst, um aus dieser Anzahl eine Folge von aufeinanderfolgenden Adressenwerten zum Abfragen der Quellen (5, 6, 7, ...) zu bestimmen.

## Claims

1. Method of centralization of data, consisting in distributing the data sources into groups, the sources (5, 6, 7, ...) of one group being sampled by a local processor (24) while being each designated by an address, called sampling address, the value of which is allocated by an operator; consisting in transmitting the data supplied by the sources (5, 6, 7, ...) towards a central station (1), while each of the sources (5, 6, 7, ...) is designated by an address, called interrogation address, characterized in that the values of the sampling addresses on the one hand and the values of the interrogation addresses on the other hand are consecutive values; in that, upon each modification of the number of sources (5, 6, 7, ...) of a group it consists:

— in having all of the sources of this group sampled by the local processor (24) associated with this group in order to determine the sampling addresses where a source is actually present;

— in causing the local processor (24) to determine the new number of actually present sources, determine a new sequence of consecutive values for the sampling addresses, and cause it to transmit this number to the central station (1);

— and in causing the central station (1) to determine a new sequence of consecutive interrogation address values.

2. Method according to Claim 1, characterized in that the lower limit of the sequence of sampling address values has a fixed value; in that its upper limit has a value increasing by n units (n integer) if the number of sources belonging to the group considered increases by n units, and decreases by n units if the number of sources belonging to this group decreases by n units; and in that its upper limit remains unchanged in case a source becomes inoperative and in case a source is eliminated without modification of the addresses allocated to the other sources by an operator.

3. System for the centralization of data using the method of any of Claims 1 or 2, comprising a central station (1) and satellite stations (No. 1, 2, ...) whereto groups of data sources (5, 6, 7, ...) are connected, each satellite station (No. 1, 2, ...) comprising a local processor (24) for sampling the data sources, characterized in that the local processor (24) of each satellite station (No. 1, 2, 3, ...) is programmed in order to:

— determine the number of sources (5, 6, 7, ...) connected to this satellite station (No. 1, 2, 3, ...);

— transmit this number to the central station (1);

— determine a sequence of consecutive address values corresponding to this number for the sampling of these sources (5, 6, 7, ...); and

in that the central station (1) comprises a processor for determining from this number a sequence of consecutive address values for the interrogation of the sources (5, 6, 7, ...)

0 082 766

Fig.1

Fig.2

Fig.3